(19) Europäisches Patentamt
European Patent Office
Office européen des brevets

(11) **EP 3 909 918 B1**

(12) **EUROPÄISCHE PATENTSCHRIFT**

(45) Veröffentlichungstag und Bekanntmachung des Hinweises auf die Patenterteilung:
**24.01.2024 Patentblatt 2024/04**

(21) Anmeldenummer: **20174119.6**

(22) Anmeldetag: **12.05.2020**

(51) Internationale Patentklassifikation (IPC):
**C02F 1/463** *(2023.01)* **C02F 1/68** *(2023.01)*
C02F 1/461 *(2023.01)* C02F 101/30 *(2006.01)*
C02F 1/66 *(2023.01)*

(52) Gemeinsame Patentklassifikation (CPC):
**C02F 1/463; C02F 1/68;** C02F 1/46114; C02F 1/66;
C02F 2001/46123; C02F 2001/46138;
C02F 2101/30; C02F 2305/04

(54) **VERFAHREN UND VORRICHTUNG ZUR ELEKTROSTATISCHEN ABSCHEIDUNG VON POLYMERPARTIKELN AUS ABWÄSSERN**

METHOD AND DEVICE FOR THE ELECTROSTATIC SEPARATION OF POLYMER PARTICLES FROM WASTE WATER

PROCÉDÉ ET DISPOSITIF DE SÉPARATION ÉLECTROSTATIQUE DES PARTICULES POLYMÈRES D'EAUX USÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.11.2021 Patentblatt 2021/46**

(73) Patentinhaber:
• **Evonik Operations GmbH**
**45128 Essen (DE)**
• **Friedrich-Alexander-Universität Erlangen-Nürnberg**
**91054 Erlangen (DE)**

(72) Erfinder:
• **STENNER, Patrik**
**63452 Hanau (DE)**
• **TECLE, Yikalo-Eyob**
**63065 Offenbach (DE)**
• **HOCH, Dr., Sascha**
**44797 Bochum (DE)**
• **VOGEL, Prof., Nicolas**
**91052 Erlangen (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(56) Entgegenhaltungen:
CN-A- 104 710 063    DE-A1- 4 102 238
JP-A- 2005 087 789

**Beschreibung**

Die vorliegende Erfindung betrifft ein Verfahren zur Senkung der Konzentration polymerer Partikel in einem wässrigen Gemisch mit Hilfe eines elektrostatischen Feldes sowie eine Vorrichtung zur Durchführung dieses Verfahrens.

Obwohl die Reinhaltung der Gewässer unseres Planeten seit Langem in dem Bewusstsein der Öffentlichkeit ist, liegt in der Entfernung von durch Polymere bestehenden Verunreinigungen noch immer eine große technische Herausforderung.

Etablierte Verfahren, die Qualität von Trink- und Brauchwasser auf ein definiertes Niveau zu bringen, sind neben Filtertechniken und gezielter Ergänzung von Stoffen zwecks Einstellung des pH-Wertes die Enteisenung, Entmanganung, Enthärtung und Entsalzung (https://de.wikipedia.org/wiki/Wasseraufbereitung).

Ebenso bekannt ist die "Sequenzielle biologische Reinigung" (SBR) zur Entkeimung (https://www.graf-online.de/abwasser/so-funktioniert-abwassertechnik/wie-funktioniert-eine-sbr-klaeranlage.html).

Des Weiteren finden sich in Kläranlagen Kombinationen der SBR Verfahren mit Fest-, Wirbel- und Schwebebett-Klärverfahren (http://www.wassertechnik-sachsen.de/cms/website.php?id=/de/index/klaervf.htm).

Am Fraunhofer Institut wurde eine Methode entwickelt, schwer abbaubare Schadstoffe aus Industrieabwasser zu entfernen, indem in der Umgebungsluft brennendes Plasma in einen direkten Kontakt mit der Wasseroberfläche gebracht wird (https://www.igb.fraunhofer.de/de/presse-medien/presseinformationen/2013/schad--und-spurenstoffe-aus-abwasser-entfernen.html).

In Wasser suspendierte, kolloidale Feststoffpartikel können auch zur Flockung gebracht werden. Grundlagen dazu finden sich bereits im Brockhaus, "ABC Chemie", Brockhaus Verlag Leibzig, 1965. Die Wirkungsweise von Flockungsmitteln wird in einer neueren Veröffentlichung der TU Wien, http://www.kan.at/upload/medialibrary/Kreuzinger_-_Flockungshilfsmittel.pdf, vorgestellt.

Zur Entfernung von Teilchen im Bereich einiger Mikrometer aus Flüssigkeiten hat sich ebenfalls die Crossflow-Filtration etabliert, beispielhaft beschrieben bei https://www.bokela.com/de/crossflow-filtration.

Bei der sogenannten Bandfiltration werden aus Suspensionen, die die Dichte von Schlamm erreichen, mittels Bändern oder Gurten unter Druck, Schwerkraft und/oder Rüttelvorrichtungen diverse Filtrate abgetrennt (https://de.wikipedia.org/wiki/Bandfilter_(Verfahrenstechnik)).

Weiterhin geben technische Regelwerke einen Überblick über die Möglichkeiten, aus Suspensionen Teilchen abzutrennen, beispielsweise die VDI Richtlinie 2762, Blatt 1, 2 und 3. Eine aktuelle Vorgehensweise, Verschmutzungen durch Polymerpartikel zu beseitigen, besteht darin, die Polymerpartikel über ein Belebtschlammverfahren anzureichern und anschließend zu verbrennen. Weitere, relevante Dokumente sind DE 41 02 238 A1, CN 104 710 063 A, JP 2005 087789 A.

Aufgabe der Erfindung war daher die Bereitstellung eines Verfahrens, das konventionellen Verfahren im Hinblick auf Effizienz und einfache Durchführbarkeit voraus ist. Des Weiteren sollte eine Vorrichtung bereitgestellt werden, mittels der dieses Verfahren durchgeführt werden kann.

Überraschenderweise lässt sich das $\zeta$ - Potential polymerer Partikel nutzen, die sich in einem Gemisch befinden, das solche Partikel in wässrigem Medium aufweist, um die polymeren Partikel zumindest teilweise aus diesem Gemisch zu entfernen.

De Gegenstand der Erfindung wird in den unabhängigen Ansprüchen 1 und 8 dargestellt. Diese Ansprüche enthalten die wesentlichen Merkmale der Erfindung. Weitere, bevorzugte Ausführungsformen werden in den abhängigen Ansprüchen 2-7, 9 beschrieben.

Mit Hilfe dieser Technologie können geladene Polymerpartikel (PMMA) im Nanometer- bis Submikrometerbereich (130 nm) an einer Elektrode (Anode) abgeschieden und somit aus dem Abwasser entfernt werden.

Die Erfindung wird im Folgenden näher erläutert.

Vorzugsweise kann das Gemisch Abwasser, beispielsweise Prozessabwasser oder Prozesswasser sein. Weiterhin bevorzugt kann das Gemisch eine Suspension polymerer Partikel in zumindest einem wässrigen Medium sein. Das Medium ist vorzugsweise Wasser.

Das $\zeta$ - Potential auf elektrisch geladenen Oberflächen und dessen Berechnung sind dem Fachmann bekannt. Im Rahmen der Erfindung wird das Zeta-Potential mit einem Spektrometer Typ DT1200 der Firma Dispersion Technology Inc. bestimmt, das mit elektroakustischem Vibrationsstrom arbeitet. Bei dieser elektroakustischen Messmethode wird das Gemisch einem Ultraschallsignal ausgesetzt. Die Druckwellen, die durch die Umwandlung des hochfrequenten Signals über einen Piezoumwandler entstehen, bewirken eine Bewegung der Partikel relativ zur wässrigen Umgebung, die zumindest einen Emulgator enthalten kann. Die Bewegung der Partikel führt zu einer Verzerrung der dem Fachmann bekannten Doppelschicht auf den polymeren Partikeln und infolgedessen zur Bildung von Dipolen. Das elektrische Feld der Dipole wird als kolloidaler Vibrationsstrom, abgekürzt "CVI", über die Elektroden gemessen. Aus dem CVI wird im Rahmen der Messmethode auf die Stärke des Dipolfeldes und somit auf das Zeta-Potential der polymeren Partikel geschlossen.

Negatives $\zeta$ - Potential ist gleichbedeutend damit, dass die polymeren Partikel eine negative Oberflächenladung aufweisen. Bei positivem $\zeta$ - Potential ist es entsprechend umgekehrt. Je größer der Betrag des $\zeta$ - Potentials ist, desto erfolgreicher ist das erfindungsgemäße Verfahren durchführbar.

Falls zumindest ein Emulgator eingesetzt wird, ist dieser vorzugsweise ausgewählt aus C15-Paraffinsulfonat. Es können auch andere Emulgatoren eingesetzt werden, die dem Fachmann bekannt sind. Weiterhin vorzugsweise kann eine Kombination solcher Emulgatoren eingesetzt werden.

Vorzugsweise liegen die polymeren Partikel in wässrigem Medium als Suspension vor. Es wird beobachtet, dass diese Suspension umso stabiler ist, je größer der Betrag des $\zeta$ - Potentials der polymeren Partikel ist. Eine Suspension ist im Rahmen der Erfindung dann stabil, wenn keine Agglomeration der polymeren Partikel in Abwesenheit von außen angelegter elektrostatischer Felder stattfindet.

In dem erfindungsgemäßen Verfahren wird ein elektrostatisches Feld zwischen positiver und negativer Elektrode erzeugt, indem vorzugsweise an den Elektroden eine Gleichspannung angelegt wird und sich das Gemisch zumindest teilweise zwischen der positiven Elektrode (Anode) und der negativen Elektrode (Kathode) befindet.

Es kann vorteilhaft sein, die Stromstärke zwischen den Elektroden konstant zu halten, indem die Spannung entsprechend gefahren wird. Die Methode, die Stromstärke manuell oder mit elektronischen Hilfsmitteln derart zu regeln, ist dem Fachmann bekannt. Ebenfalls ist dem Fachmann klar, dass die Stromstärke im Rahmen der Erfindung proportional zu der mit dem Gemisch in Kontakt stehenden Fläche der Elektroden und umgekehrt proportional zu dem Abstand zwischen den in das Gemisch ragenden Elektroden ist, so dass die jeweils gemessene Stromstärke, die in den Beispielen berichtet wird, jeweils auf die besagte Fläche und den Elektrodenabstand bezogen zu verstehen ist.

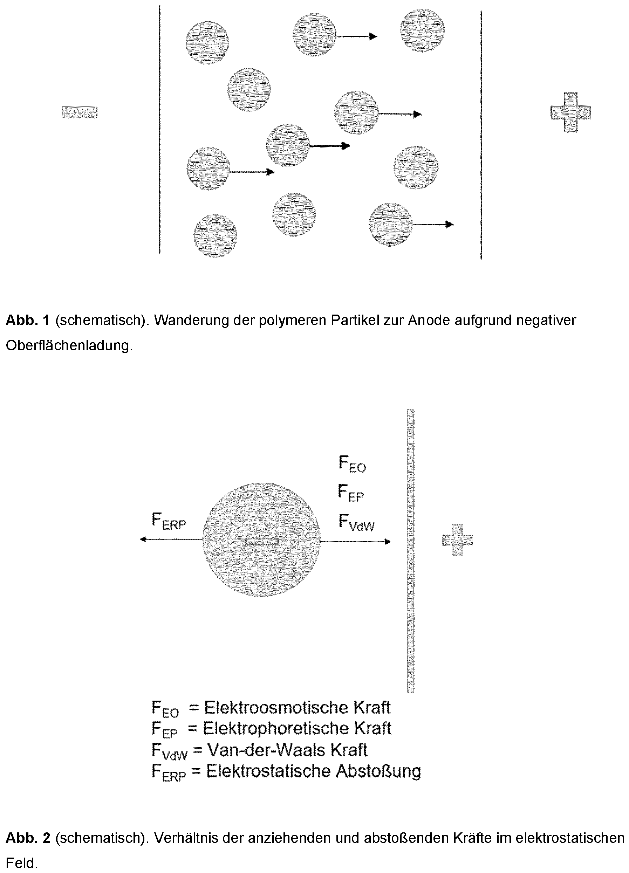

Ohne an eine bestimmte Theorie gebunden zu sein, sind die Erfinder der Ansicht, dass die polymeren Partikel auf zumindest einem Teil der Oberfläche der Anode oder Kathode abgeschieden werden, indem das elektrostatische Feld eine Wanderung der polymeren Partikel in dem wässrigen Medium aufgrund ihrer negativen oder positiven Oberflächenladung zu der Anode oder Kathode bewirkt, schematisch dargestellt in **Abb. 1** für den Fall negativer Oberflächenladung, bedeutend negativem $\zeta$ - Potential.

Es kann vorteilhaft sein, in dem erfindungsgemäßen Verfahren die elektrische Feldstärke zwischen der positiven und der negativen Elektrode auf einen Wert von 800 bis 12000 V m$^{-1}$ einzustellen. Die Messung der elektrischen Feldstärke, im Rahmen der Erfindung gleichbedeutend mit der Stärke des elektrostatischen Feldes, ist dem Fachmann bekannt.

An der Anode oder Kathode findet eine Koagulation der Partikel statt, indem gleichzeitig deren Betrag des $\zeta$-Potentials an der Anode oder Kathode abgebaut wird, gleichbedeutend mit einem Abbau der Ladung an den Oberflächen der Partikel.

Notwendige Voraussetzung der Wanderung und der Koagulation der Partikel an der Anode oder Kathode ist das Überwiegen der auf die Partikel anziehenden Kräfte, beispielsweise der Summe aus elektroosmotischer, elektrophoretischer und Van-der-Waals-Kraft, gegen abstoßende Kräfte, beispielsweise der elektrostatischen Abstoßung. Dies zeigt schematisch die **Abb. 2** für den Fall negativer Oberflächenladung.

Der besagte Abbau der Ladung geht in die Messung der oben erläuterten Stromstärke ein, so dass mit einer Veränderung, vorzugsweise einer Verringerung der Stromstärke gerechnet werden muss, falls in dem Gemisch nur eine begrenzte Menge polymerer Partikel mit nicht verschwindendem $\zeta$-Potential bereitsteht. In den Beispielen wurde jedoch das Gemisch kontinuierlich ausgetauscht und die Stromstärke jeweils konstant gehalten. Es wurde beobachtet, dass während der Durchführung des erfindungsgemäßen Verfahrens kaum Veränderungen der jeweils angelegten Gleichspannung vorgenommen werden mussten, um die Stromstärke konstant zu halten.

Im Falle negativer Oberflächenladungen wird der Abbau der Ladung an den Oberflächen der Partikel umso mehr unterstützt, je geringer der pH-Wert des wässrigen Mediums an der Anode ist. Ist demnach, einerseits, die Suspension der polymeren Partikel umso stabiler, je stärker negativ deren $\zeta$-Potential ist, wird der $\zeta$-Potential Betrag, andererseits, an der Anode umso eher oder rascher verringert, je kleiner der pH-Wert des wässrigen Mediums an der Anode ist. Der pH-Wert kann vorzugsweise durch Zugabe einer Säure, beispielsweise Schwefelsäure, gesenkt werden. Der pH-Wert des wässrigen Mediums an der Anode wird ebenso bevorzugt abgesenkt, besonders bevorzugt in den sauren Bereich (pH < 7), indem eine Gleichspannung angelegt wird, die eine zumindest teilweise Elektrolyse des Wassers bewirkt.

Es kann vorteilhaft sein, den pH-Wert des wässrigen Mediums in einem Bereich von 1 bis 12 pH, mehr bevorzugt von 1 bis 7 pH, besonders bevorzugt von 1 bis 4 pH zu wählen.

Wird das erfindungsgemäße Verfahren mit Latexpartikeln durchgeführt, ist besonders vorteilhaft, wenn der pH-Wert des wässrigen Mediums in einem Bereich von 1 bis 12 pH liegt, mehr bevorzugt von 1 bis 7 pH, besonders bevorzugt von 1 bis 4 pH.

Auch in diesen Fällen ändert sich der pH-Wert während der Durchführung des erfindungsgemäßen Verfahrens. Durch die Elektrolyse des Wassers werden an der Anode H+ Ionen erzeugt, welche den pH-Wert an der Anode von anfangs 3,5 auf 1 fallen lassen. Dadurch reduziert sich auch das $\zeta$-Potential, und die polymeren Partikel scheiden sich ab.

Für den Fall positiver Oberflächenladungen sind alle Verhältnisse umgekehrt, d.h. auf die Kathode bezogen, und zwar mit positivem $\zeta$-Potential und basischen pH-Werten, die vorzugsweise umso höher an der Kathode sind, um den Abbau positiver Ladungen auf den polymeren Partikeln zu unterstützen.

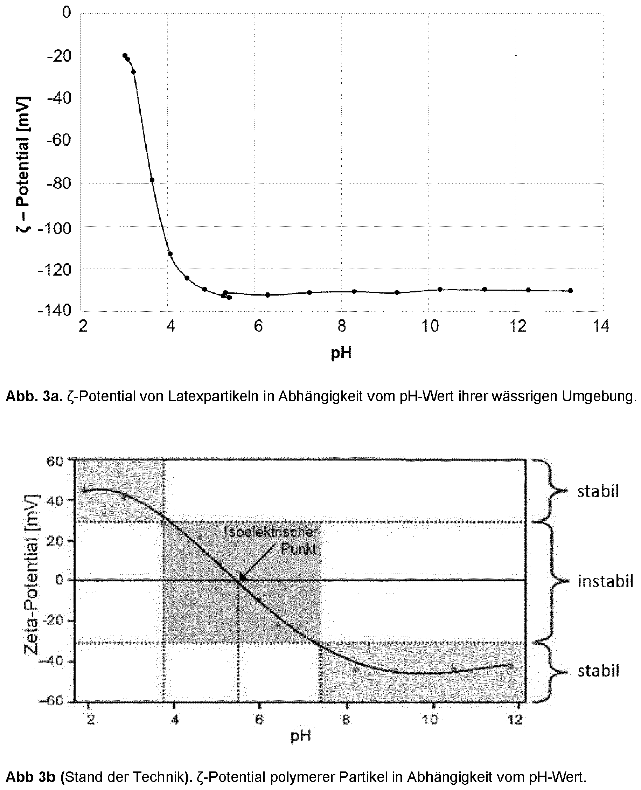

Das $\zeta$-Potential in Abhängigkeit des pH-Wertes der wässrigen Umgebung ist beispielhaft in der **Abb. 3a** dargestellt. Bei den polymeren Partikeln handelt es sich um Latexpartikel. Der pH-Wert wurde mittels Titration von NaOH (1 mol/l) mit Schwefelsäure $H_2SO_4$ (1 mol/l) eingestellt. Eine qualitativ vergleichbare Darstellung nebst fachtypischen Begriffen findet sich bei Schmidt, Volkmar M., "Elektrochemische Verfahrenstechnik", Weinheim, WILEY-VCH Verlag, 2003, **Abb. 3b.** Dort sind auch die Bereiche hervorgehoben, in denen die Suspension im Rahmen der Erfindung stabil ist, gleichbedeutend damit, dass keine Agglomeration der polymeren Partikel in Abwesenheit von außen angelegter elektrostatischer Felder stattfindet.

Vorteilhaft können solche polymeren Partikel eingesetzt werden, die ein $\zeta$ - Potential von 30 mV bis 300 mV oder von -30 mV bis -300 mV aufweisen.

Das $\zeta$-Potential der an der Anode bzw. Kathode abgeschiedenen polymeren Partikel muss nach der Durchführung des erfindungsgemäßen Verfahrens nicht notwendig bis auf Null abgebaut sein. Für die erfolgreiche Durchführung des erfindungsgemäßen Verfahrens mit negativem $\zeta$-Potential reicht vorzugsweise ein Abbau des $\zeta$-Potentials von -140 mV auf -20 mV aus, weiter bevorzugt von -140 mV auf -10 mV, bzw. ein Abbau des $\zeta$ - Potentials von 140 mV auf 20 mV, weiter bevorzugt von 140 mV auf 10 mV.

Ganz besonders bevorzugt sind polymere Partikel mit einem $\zeta$ - Potential von -140 mV. Weiterhin ganz besonders bevorzugt sind die polymeren Partikel Latexpartikel.

Im Rahmen der Erfindung können polymere Partikel auch solche Partikel sein, die zumindest ein Polymer an ihrer Oberfläche aufweisen.

Die polymeren Partikel, vorzugsweise Latexpartikel, können eine Partikelgröße $d_{50\%}$ von 50 bis 1000 nm aufweisen, besonders bevorzugt $d_{50\%}$ = 130 nm. Die Partikelgröße der Polymerpartikel wird mit Hilfe der dynamischen Lichtstreuung (DLS) ermittelt, wobei im Rahmen der Erfindung ein Zetasizer Nano ZS90 der Firma Malvem Instruments eingesetzt wurde. Die Messmethode beruht auf einer Korrelation der Brown'schen Molekularbewegung mit der Partikelgröße.

Die erfindungsgemäß an der Anode oder Kathode abgeschiedenen koagulierten polymeren Partikel sind im Rahmen der Erfindung auch als "polymere Masse" bezeichnet.

Im Rahmen der Erfindung werden die polymeren Partikel auf der Anode oder Kathode abgeschieden oder sind dort als polymere Masse abgeschieden, wenn zumindest ein Teil der koagulierten polymeren Partikel das Gemisch verlässt, falls die Anode oder Kathode mit einer mechanischen Bewegung zumindest teilweise aus dem Gemisch heraus bewegt wird. Demnach ist diese Anode oder Kathode als beweglicher Körper ausgeführt.

Der bewegliche Körper, der zumindest teilweise aus dem Gemisch heraus bewegt werden kann, ist eine rotierende Walze. Dementsprechend wird die rotierende Walze zu einem Teil ihrer Oberfläche in das Gemisch eingetaucht, so dass bei der Rotation der Walze stets ein Teil ihrer Oberfläche aus dem Gemisch heraustritt und ein anderer Teil in das Gemisch eintaucht. Der Teil der polymeren Masse, die das Gemisch verlässt, kann sodann mechanisch abgetragen, gleichbedeutend von der Anode oder Kathode außerhalb des Gemisches abgehoben werden. Erfindungsgemäß kann dieser Teil der polymeren Masse mittels konventionellem Rakeln, Spülen, Blasen, Bürsten oder Saugen abgehoben werden. Infolgedessen wird dem erfindungsgemäßen Verfahren zumindest eine Rakel eingesetzt werden.

Um einerseits Störungen des elektrostatischen Feldes zu minimieren, andererseits möglichst große Mengen an abgeschiedener polymerer Masse abzuheben, kann die Rakel auf fachübliche Weise, besonders bevorzugt unter den Maßgaben statistischer Versuchsplanung von dem beweglichen Körper beabstandet sein. Nähere Angaben im Hinblick auf statistische Versuchsplanung finden sich beispielsweise bei Siebertz, Karl, van Bebber, David und Hochkirchen, Thomas, "*Statistische Versuchsplanung",* Heidelberg, Springer-Verlag, 2010.

Das weitere Vorgehen mit der, wie oben gesagt, aus dem Gemisch entfernten und von der Anode oder Kathode abgehobenen polymeren Masse liegt im Ermessensbereich des Fachmanns. Beispielsweise kann die Masse der abgeschiedenen Polymerpartikel rezykliert oder konventionellen Methoden der Entsorgung zugeführt werden, z.B. der Verbrennung oder anderweitigen Methoden der Umsetzung.

Demnach kann ganz besonders bevorzugt das erfindungsgemäße Verfahren kontinuierlich durchgeführt werden. Gleichfalls bevorzugt kann das erfindungsgemäße Verfahren an kontinuierlich nachgeführtem Gemisch durchgeführt werden, so dass kontinuierlich polymere Partikel in wässrigem Medium bereitgestellt sind und an der Anode oder Kathode kontinuierlich polymere Masse abgeschieden werden kann. Das erfindungsgemäße Verfahren kann besonders bevorzugt in fließendem Gemisch oder in dem Gemisch durchgeführt werden, das zwischen Anode und Kathode hindurchfließt oder mittels Pumpen hindurch befördert wird. Dadurch lässt sich das beanspruchte Verfahren auch in großem Maßstab durchführen, beispielsweise in der Reinigung von durch polymere Partikel verunreinigten Gewässern. Gegenstand der Erfindung ist daher ebenfalls eine Vorrichtung zur Senkung der Konzentration polymerer Partikel in einem Gemisch, das polymere Partikel in wässrigem Medium aufweist, zur Durchführung des erfindungsgemäßen Verfahrens, umfassend

- zumindest eine Walze **W** als Anode oder Kathode, die in Rotation um eine Achse **A** versetzt ist und zumindest teilweise in das Gemisch **G** eintaucht, und
- zumindest einen Behälter **B** als Kathode oder Anode, der zumindest teilweise mit dem Gemisch befüllt ist, und
- zumindest eine Rakel **R,** dazu geeignet, die auf zumindest einem Teil der Oberfläche der Walze **W** abgeschiedenen polymeren Partikel **p** von der Oberfläche der in Rotation versetzten Walze **W** abzuheben.

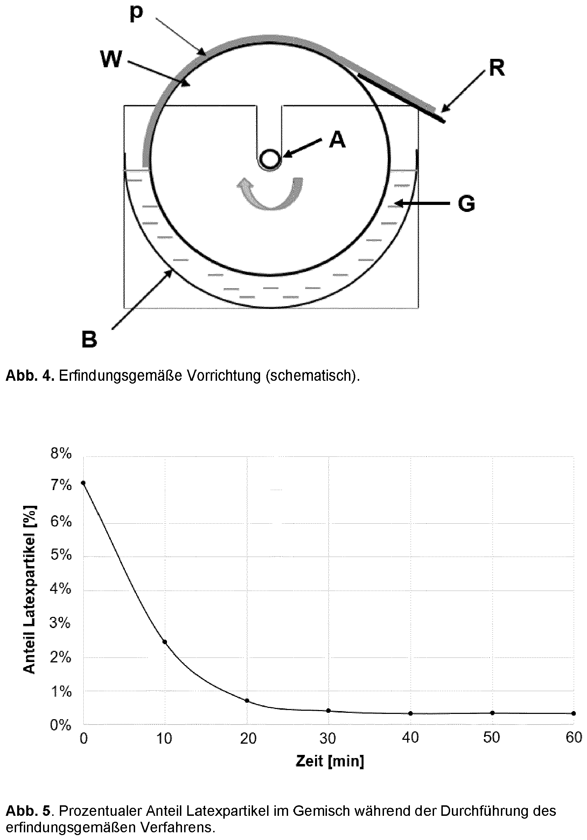

Die erfindungsgemäße Vorrichtung ist schematisch in **Abb. 4** dargestellt. Die Gleichspannungsquelle sowie deren Kontaktierung mit der Anode bzw. Kathode sind nicht gezeigt. Der Drehsinn der Rotation um die Achse **A**, gleichbedeutend mit der Längsachse der Walze **W**, ist in der **Abb. 4** mit einem Pfeil angedeutet.

Die technischen Möglichkeiten, die Walze **W** und den Behälter **B** mit einer geeigneten Gleichspannungsquelle zu kontaktieren, sind dem Fachmann bekannt. Ebenfalls stellt der Stand der Technik eine geeignete Gleichspannungsquelle zur Verfügung, mit der sich die Gleichspannung oder die Stromstärke regeln lässt.

Erfindungsgemäß ist das Material der Walze W Titan.

Wird die Vorrichtung mit einer Stahlwalze ausgestattet, erhält man bei der Durchführung des beanspruchten Verfahrens u.a. eine Gelbfärbung der abgeschiedenen polymeren Masse. Gelbfärbung weist auf Eisenatome hin, die von dem Walzenmaterial während der Durchführung des erfindungsgemäßen Verfahrens abgetragen worden sind. Dies kann jedoch unerwünscht sein, da es mit einer Korrosion des Materials der Walze verbunden ist. Deswegen ist die Auswahl von Titan als Material der Walze. Korrosion tritt damit nicht auf.

Des Weiteren kann es vorteilhaft sein, wenn die Walze **W** zumindest eine Beschichtung aufweist, vorzugsweise Iridiumoxid (DSA), Nylon-Membran, Kupfer, Gold, Silber, Blei, Platin, Tantal, Nickel, oder eine Kombination dieser Beschichtungen.

Weist die Vorrichtung Titan als Walzenmaterial und zusätzlich eine Iridiumoxid-Beschichtung auf (das nicht erfindungsgemäß ist), tritt bei der Durchführung des Verfahrens keine Gelbfärbung der polymeren Masse auf gleichbedeutend mit dem Ausbleiben von Korrosion. Im Vergleich zum Walzenmaterial Stahl werden jedoch geringere sogenannte "Abscheideraten" erzielt, und außerdem weist die polymere Masse einen höheren Feuchtegehalt auf. Weist dagegen die Vorrichtung Titan als Walzenmaterial und zusätzlich eine Iridiumoxid und eine Nylon-Membran auf (das erfindungsgemäß ist), bleiben Korrosionserscheinungen aus, und die polymere

Masse weist einen geringeren Feuchtegehalt auf. Im Rahmen der Erfindung ist die "Abscheiderate" definiert durch den Ausdruck

$$\text{Abscheiderate} = \Delta m \cdot \rho \cdot V \cdot (1-f) \cdot a^{-1} \cdot t^{-1},$$

Hierbei sind

$\Delta m$      die auf der Anode bzw. Kathode während der Zeit *t* abgeschiedene polymere Masse. Diese wiederum wird in Gewichtsanteilen angegeben, die auf die gesamte Masse des Gemisches bezogen

sind.

$\rho$      die Dichte des Gemisches;

$V$      das Volumen des Gemisches, in welchem das elektrostatische Feld erzeugt wird;

$f$      der prozentuale Feuchtegehalt der abgeschiedenen polymeren Masse;

$a$      die Fläche der mit dem Gemisch in Kontakt stehenden Elektrode, an der die polymere Masse abgeschieden wird.

In einer weiteren vorteilhaften Ausführung weist die Walze **W** der erfindungsgemäßen Vorrichtung eine angeraute Oberfläche auf. Dies hat den Vorteil, dass den polymeren Partikeln eine größere Oberfläche zur Verfügung gestellt ist, an der die Partikel abgeschieden werden können. Eine solchermaßen ausgeprägte Vorrichtung funktioniert effizienter, gleichbedeutend damit, dass bei der Durchführung des beanspruchten Verfahrens mit einer solchen Vorrichtung im gleichen Zeitraum größere polymere Massen abgeschieden werden.

Am Ausdruck der Abscheiderate ist ersichtlich, dass diese umso niedriger ist, je höher der Feuchtegehalt f bzw. je größer die Fläche a bzw. je länger die Zeitdauer t ist.

Da die polymeren Partikel, wie oben erläutert, durch das elektrostatische Feld bewegt werden, muss sich die Abscheiderate wiederum erhöhen, indem man höhere elektrostatische Feldstärken durch Einspeisen von mehr elektrischer Leistung erzeugt. Einerseits nimmt man dadurch unerwünscht gesteigerte Energiekosten in Kauf.

Bezogen auf die auf der Anode bzw. Kathode während der Zeit t abgeschiedene polymere Masse $\Delta m$ mit dem Feuchtegehalt *f* kann man die Energiekosten mit dem Ausdruck

$$\text{Energiekosten} = U \cdot I \cdot t \cdot w \cdot \Delta m^{-1} \cdot f^{-1}$$

beschreiben.

Hierbei sind

$U$      die an den Elektroden angelegte Spannung;

$I$      die Stromstärke, die während der Zeit t gemessen wird, während der die polymere Masse abgeschieden wird;

$w$      der Energiepreis, angegeben beispielsweise in Euro/kWh.

Andererseits ist die Vermeidung, zumindest Verminderung von Korrosionsvorgängen des Elektrodenmaterials von Bedeutung, um die Wirtschaftlichkeit des erfindungsgemäßen Verfahrens zu steigern bzw. zu optimieren.

Daher wird im Folgenden anhand von Beispielen erläutert, wie die Erfindung anhand der Auswahl des Walzenmaterials und seiner Beschichtung, sowie der Abscheiderate und der Energiekosten optimiert worden ist.

In allen Beispielen wurde als Gemisch eine Suspension von Latexpartikeln mit einer Partikelgröße $d_{50\%}$ von 130 nm in Wasser eingesetzt und das erfindungsgemäße Verfahren anhand der erfindungsgemäßen Vorrichtung durchgeführt.

In den Beispielen 1, 2 und 3 wurden die folgend genannten Einstellung gewählt:

- die Walzendrehzahl betrug 0,08 U/min,
- die Stromstärke 10 A, und
- der Abstand zwischen den Elektroden, gegeben durch **B** und der Oberfläche der Walze **W** in **Abb. 4**, war auf 12 mm eingestellt, und
- das Volumen des Gemisches, in welchem das elektrostatische Feld erzeugt wurde, wurde mit einem Volumenstrom von 90 l/h zwischen diesen Elektroden hindurch befördert.

**Beispiel 1 (nicht erfindungsgemäß)**

Mit den o.g. Einstellungen wurde als Material der Walze **W** Stahl eingesetzt.

Die polymere Masse wies einen Feuchtegehalt von 47 % auf. Als Energiekosten wurden 0,07 Euro/kg bei einer Abscheiderate von 1,46 kg m$^{-2}$ h$^{-1}$ erzielt.

Außerdem wurde an der polymeren Masse eine Gelbfärbung beobachtet, was auf Korrosionsvorgänge an der Walzenoberfläche hinwies.

**Beispiel 2 (nicht erfindungsgemäß)**

Wie Beispiel 1, jedoch war das Material der Walze **W** Titan, deren Oberfläche mit Iridiumoxid, sogenannt "DSA", beschichtet war.

Die polymere Masse wies einen Feuchtegehalt von 79 % auf. Als Energiekosten wurden 0,60 Euro/kg bei einer Abscheiderate von 0,24 kg m$^{-2}$ h$^{-1}$ erzielt.

An der polymeren Masse wurde keine Gelbfärbung beobachtet.

**Beispiel 3 (erfindungsgemäß)**

Wie Beispiel 2, jedoch war die Oberfläche der Walze **W** zusätzlich mit einer Nylon-Membran ausgestattet.

Die polymere Masse wies einen Feuchtegehalt von 44 % auf. Als Energiekosten wurden 0,19 Euro/kg bei einer Abscheiderate von 0,60 kg m$^{-2}$ h$^{-1}$ erzielt.

**Beispiel 4 (erfindungsgemäß)**

Wie Beispiel 3, jedoch wurden die Parameter Walzendrehzahl, Stromstärke, Abstand zwischen den Elektroden, sowie der Volumenstrom des Gemisches gemäß einer statistischen Versuchsplanung im Hinblick auf das Verhältnis von Abscheiderate und Energiekosten optimiert.

Bei

- einer Walzendrehzahl von 0,045 U/min,
- einer Stromstärke von 22 A,
- einem Abstand zwischen den Elektroden von 6 mm, sowie
- einem Volumenstrom des Gemisches von 60 l/h

wies die polymere Masse einen Feuchtegehalt von 37 % auf, und es wurde eine Abscheiderate von 3,35 kg m$^{-2}$ h$^{-1}$ bei Energiekosten von 0,14 Euro/kg erzielt.

Ausgehend von einem Anteil an Latexpartikeln in dem Gemisch von etwa 7 % vor der Durchführung des erfindungsgemäßen Verfahrens, war der Anteil bereits nach 20 min der Durchführung auf unter 1 % gesunken. Dies zeigt die **Abb. 5**.

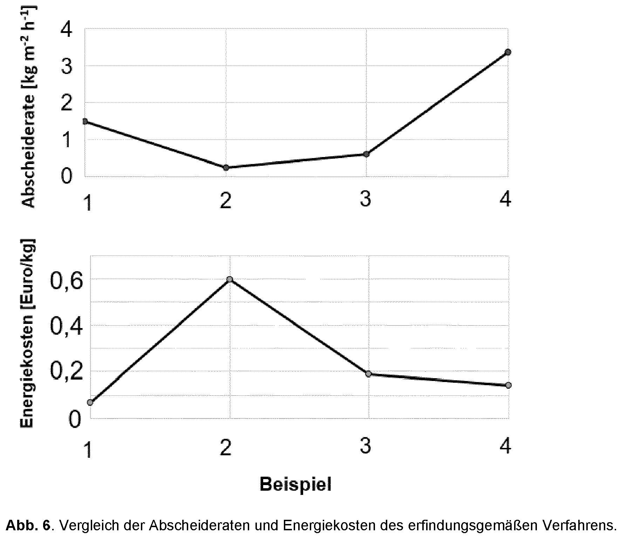

Den Vergleich der Abscheideraten und Energiekosten anhand der Beispiele 1 - 4 zeigen die Diagramme in **Abb. 6**.

**Patentansprüche**

1. Verfahren zur Senkung der Konzentration polymerer Partikel in einem Gemisch, das polymere Partikel in wässrigem Medium aufweist, mittels der Vorrichtung nach Ansprüche 8 oder 9,
**dadurch gekennzeichnet, dass**

    die polymeren Partikel in dem wässrigen Medium ein $\zeta$ - Potential aufweisen, wobei, falls das $\zeta$-Potential gleich Null ist, dem Gemisch zumindest ein Emulgator zugemischt wird, der bewirkt, dass das $\zeta$-Potential $\neq 0$ ist,
    und
    das Gemisch zwischen zwei Elektroden gebracht wird, zwischen denen zumindest ein elektrostatisches Feld erzeugt wird, wobei zumindest eine Elektrode ein beweglicher Körper ist, der zumindest teilweise aus dem Gemisch herausbewegt werden kann, und eine rotierende Walze **W** ist,
    wobei
    die Walze **W** als Anode oder Kathode in Rotation um eine Achse **A** versetzt ist und zumindest teilweise in das Gemisch **G** eintaucht, und
    das Material der Walze **W** ausgewählt ist aus Titan, und die Walze **W** zumindest eine Beschichtung aufweist aus Iridiumoxid (DSA) und einer Nylon-Membran, so dass die polymeren Partikel auf zumindest einem Teil der Oberfläche der positiven oder negativen Elektrode abgeschieden werden.

2. Verfahren nach Anspruch 1, wobei der bewegliche Körper eine rotierende Walze ist, die zu einem Teil ihrer Oberfläche in das Gemisch eingetaucht ist, so dass bei der Rotation der Walze stets ein Teil ihrer Oberfläche aus dem Gemisch heraustritt und ein anderer Teil in das Gemisch eintaucht.

3. Verfahren nach einem der vorhergehenden Ansprüche, wobei
die elektrische Feldstärke zwischen jeweils einer positiven und einer negativen Elektrode eingestellt wird von 800 bis 12000 V m$^{-1}$.

4. Verfahren nach einem der vorhergehenden Ansprüche, wobei
die polymeren Partikel Latexpartikel sind.

5. Verfahren nach einem der vorhergehenden Ansprüche, wobei
der Emulgator C15-Paraffinsulfonat ist.

6. Verfahren nach einem der vorhergehenden Ansprüche, wobei
der pH-Wert des wässrigen Mediums in einem Bereich von 1 bis 12 pH liegt, mehr bevorzugt von 1 bis 7 pH, besonders bevorzugt von 1 bis 4 pH.

7. Verfahren nach einem der vorhergehenden Ansprüche, wobei die abgeschiedenen polymeren Partikel mittels Rakeln, Spülen, Blasen, Bürsten oder Saugen von dem aus dem Gemisch herausbewegten Körper abgehoben werden.

8. Vorrichtung zur Senkung der Konzentration polymerer Partikel in einem Gemisch, das polymere Partikel in wässrigem Medium aufweist, zur Durchführung des Verfahrens nach einem der Ansprüche 1 - 7, umfassend

- zumindest eine Walze **W** als Anode oder Kathode, die in Rotation um eine Achse **A** versetzt ist und zumindest teilweise in das Gemisch **G** eintaucht, wobei das Material der Walze **W** ausgewählt ist aus Titan und die Walze **W** zumindest eine Beschichtung aufweist aus Iridiumoxid (DSA) und einer Nylon-Membran und
- zumindest einen Behälter **B** als Kathode oder Anode, der zumindest teilweise mit dem Gemisch befüllt ist, und
- zumindest eine Rakel **R,** dazu geeignet, die auf zumindest einem Teil der Oberfläche der Walze **W** abgeschiedenen polymeren Partikel **p** von der Oberfläche der in Rotation versetzten Walze **W** abzuheben.

9. Vorrichtung nach Anspruch 8, wobei die Oberfläche der Walze **W** angeraut ist.

**Claims**

1. Process for lowering the concentration of polymeric particles in a mixture containing polymeric particles in aqueous medium, by means of the apparatus according to Claim 8 or 9, **characterized in that**

the polymeric particles in the aqueous medium have a $\zeta$ potential, where,
if the $\zeta$ potential is zero, at least one emulsifier is admixed to the mixture to cause the $\zeta$ potential to be $\neq 0$,
and
the mixture is brought between two electrodes between which at least one electrostatic field is generated, where
at least one electrode is a movable body which can be moved at least partly out of the mixture and is a rotating roll W,
where
the roll W as anode or cathode is set in rotation about an axis A and dips at least partly into the mixture G, and
the material of the roll W is selected from titanium, and the roll W has at least one coating of iridium oxide (DSA) and a nylon membrane, so that the polymeric particles are deposited on at least part of the surface of the positive or negative electrode.

2. Process according to Claim 1, wherein the movable body is a rotating roll which is immersed over part of its surface in the mixture, so that on rotation of the roll always part of its surface emerges from the mixture and another part dips into the mixture.

3. Process according to either of the preceding claims, wherein
the electrical field strength between each positive and each negative electrode is set at from 800 to 12 000 V m$^{-1}$.

4. Process according to any of the preceding claims, wherein
the polymeric particles are latex particles.

5. Process according to any of the preceding claims, wherein
the emulsifier is C15 paraffinsulfonate.

6. Process according to any of the preceding claims, wherein
the pH of the aqueous medium is in a range from 1 to 12 pH, more preferably from 1 to 7 pH, very preferably from 1 to 4 pH.

7. Process according to any of the preceding claims, wherein the polymeric particles deposited are lifted from the body moved out of the mixture by means of doctor blading, flushing, blowing, brushing or sucking.

**8.** Apparatus for lowering the concentration of polymeric particles in a mixture containing polymeric particles in aqueous medium, for performing the process according to any of Claims 1-7, comprising

- at least one roll W as anode or cathode, which is set in rotation about an axis A and dips at least partly into the mixture G, where the material of the roll W is selected from titanium and the roll W has at least one coating of iridium oxide (DSA) and a nylon membrane, and
- at least one container B as cathode or anode, which is filled at least partly with the mixture, and
- at least one doctor blade R, suitable for lifting the polymeric particles p, deposited on at least part of the surface of the roll W, from the surface of the roll W set in rotation.

**9.** Apparatus according to Claim 8, wherein the surface of the roll W is roughened.

**Revendications**

**1.** Procédé destiné à abaisser la concentration en particules polymères dans un mélange, qui présente des particules polymères dans un milieu aqueux, au moyen du dispositif selon les revendications 8 ou 9, **caractérisé en ce que**

les particules polymères dans le milieu aqueux présentent un potentiel ζ, où
si le potentiel ζ vaut zéro, au moins un émulsifiant qui fait que le potentiel ζ est ≠ 0 est incorporé dans le mélange
et
le mélange est introduit entre deux électrodes entre lesquelles au moins un champ électrostatique est généré, au moins une électrode étant un corps mobile, qui peut être déplacé au moins partiellement hors du mélange, et étant un cylindre rotatif W,
où
le cylindre W en tant qu'anode ou cathode est mis en rotation autour d'un axe A et est immergé au moins partiellement dans le mélange G et
le matériau du cylindre W est choisi parmi le titane et le cylindre W présente au moins un revêtement en oxyde d'iridium (DSA) et une membrane en nylon de telle sorte que les particules polymères sont déposées sur au moins une partie de la surface de l'électrode positive ou négative.

**2.** Procédé selon la revendication 1, dans lequel le corps mobile est un cylindre rotatif qui est immergé avec une partie de sa surface dans le mélange, de telle sorte que lors de la rotation du cylindre, une partie de sa surface est toujours hors du mélange et une autre partie est toujours immergée dans le mélange.

**3.** Procédé selon l'une des revendications précédentes, dans lequel
l'intensité du champ électrique entre respectivement une électrode positive et une électrode négative est réglée de 800 à 12000 V m$^{-1}$.

**4.** Procédé selon l'une des revendications précédentes, dans lequel
les particules polymères sont des particules de latex.

**5.** Procédé selon l'une des revendications précédentes, dans lequel
l'émulsifiant est le sulfonate de paraffine en C15.

**6.** Procédé selon l'une des revendications précédentes, dans lequel
le pH du milieu aqueux est situé dans une plage de pH 1 à 12, plus préférablement de pH 1 à 7, de manière particulièrement préférée de pH 1 à 4.

**7.** Procédé selon l'une des revendications précédentes, dans lequel les particules polymères déposées sont retirées du corps déplacé hors du mélange par raclage, rinçage, soufflage, brossage ou aspiration.

**8.** Dispositif destiné à abaisser la concentration en particules polymères dans un mélange, qui présente des particules polymères dans un milieu aqueux, pour mettre en œuvre le procédé selon l'une des revendications 1-7, comprenant

- au moins un cylindre W en tant qu'anode ou cathode, qui est mis en rotation autour d'un axe A et qui est au moins partiellement immergé dans le mélange G, le matériau du cylindre W étant choisi parmi le titane et le cylindre W présentant au moins un revêtement en oxyde d'iridium (DSA) et une membrane en nylon et
- au moins un récipient B en tant que cathode ou anode, qui est rempli au moins partiellement du mélange et
- au moins une racle R qui est destinée à retirer les particules polymères p déposées sur au moins une partie de la surface du cylindre W à partir de la surface du cylindre W mis en rotation.

**9.** Dispositif selon la revendication 8, la surface du cylindre W ayant été rendue rugueuse.

**Abb. 1** (schematisch). Wanderung der polymeren Partikel zur Anode aufgrund negativer Oberflächenladung.

$F_{EO}$ = Elektroosmotische Kraft
$F_{EP}$ = Elektrophoretische Kraft
$F_{VdW}$ = Van-der-Waals Kraft
$F_{ERP}$ = Elektrostatische Abstoßung

**Abb. 2** (schematisch). Verhältnis der anziehenden und abstoßenden Kräfte im elektrostatischen Feld.

**Abb. 3a.** ζ-Potential von Latexpartikeln in Abhängigkeit vom pH-Wert ihrer wässrigen Umgebung.

**Abb 3b (**Stand der Technik**).** ζ-Potential polymerer Partikel in Abhängigkeit vom pH-Wert.

**Abb. 4.** Erfindungsgemäße Vorrichtung (schematisch).

**Abb. 5**. Prozentualer Anteil Latexpartikel im Gemisch während der Durchführung des erfindungsgemäßen Verfahrens.

**Abb. 6**. Vergleich der Abscheideraten und Energiekosten des erfindungsgemäßen Verfahrens.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4102238 A1
- CN 104710063 A
- JP 2005087789 A

**In der Beschreibung aufgeführte Nicht-Patentliteratur**

- **SCHMIDT, VOLKMAR M.** Elektrochemische Verfahrenstechnik. WILEY-VCH Verlag, 2003